# EUROPÄISCHE PATENTANMELDUNG

(11) **EP 4 541 764 A1**
(43) Veröffentlichungstag der Anmeldung: **23.04.2025**
(21) Anmeldenummer: 23204062.6
(22) Anmeldetag: 17.10.2023
(51) Int. Cl.: C01B 3/36, C01B 3/38

(54) **VERFAHREN UND ANLAGE ZUM HERSTELLEN EINES ROHSYNTHESEGASES DURCH PARTIALOXIDATION VON KOHLENWASSERSTOFFHALTIGEN GASEN UND FLÜSSIGKEITEN**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Müller-Hagedorn, Matthias, 60388 Frankfurt am Main (DE); Covella, Karsten, 60388 Frankfurt am Main (DE); Botzen, Gerald, 40003 Düsseldorf (DE)
(74) Vertreter: Air Liquide

(57) **Zusammenfassung**

Die Erfindung betrifft ein Verfahren und eine Anlage zum Herstellen eines Wasserstoff und Kohlenoxide enthaltenden Rohsynthesegases durch gleichzeitige Partialoxidation eines kohlenwasserstoffhaltigen Gaseinsatzstroms und eines kohlenwasserstoffhaltigen, Verunreinigungen enthaltenden Flüssigeinsatzstroms. Die Verdampfung des flüssigen Einsatzstroms erfolgt unter Teilverdampfungsbedingungen, wobei ein gasförmiger Mischeinsatzstrom und ein flüssiger Reststrom erhalten werden. Der gasförmige Mischeinsatzstrom ist gegenüber dem kohlenwasserstoffhaltigen Flüssigeinsatzstrom an den Verunreinigungen abgereichert und wird der Partialoxidation zugeführt, wobei durch die Abreicherung die Bildung von Ablagerungen durch Kristallisation gelöster anorganischer Bestandteile oder von Kohlenstoffablagerungen, insbesondere im und/oder stromaufwärts vom POX-Brenner, wirkungsvoll verhindert wird. Der flüssige Reststrom ist gegenüber dem kohlenwasserstoffhaltigen Flüssigeinsatzstrom an den Verunreinigungen angereichert und wird aus dem Verfahren ausgeleitet.

## Beschreibung

### Gebiet der Erfindung

Die Erfindung betrifft ein Verfahren zum Herstellen eines Wasserstoff und Kohlenoxide enthaltenden Rohsynthesegases durch gleichzeitige Partialoxidation eines kohlenwasserstoffhaltigen Gaseinsatzstroms und eines kohlenwasserstoffhaltigen Flüssigeinsatzstroms. Die Erfindung betrifft weiterhin eine Anlage zum Herstellen eines Rohsynthesegasstroms.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese.

Ein gängiges Verfahren zur Herstellung von Synthesegasen ist die autotherme Flugstromvergasung von gasförmigen, flüssigen oder festen Brennstoffen, wie sie beispielsweise in der DE 10 2006 059 149 B4 beschrieben ist. Am Kopf eines Reaktors sind zentral ein Zünd- und Pilotbrenner sowie rotationssymmetrisch zur Reaktorachse drei Vergasungsbrenner angeordnet. Über die Vergasungsbrenner wird einem Vergasungsraum des Reaktors Kohlenstaub mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum, in den zur Kühlung von Rohgas und Schlacke Wasser eingedüst wird. Die Schlacke lagert sich im Wasserbad ab und wird über einen Schlackeaustrag abgeführt. Das gequenchte Rohgas wird wasserdampfgesättigt aus dem Quenchraum abgezogen und in nachfolgenden Reinigungsstufen gereinigt. Da der Brennstoff direkt mit dem Oxidationsmittel umgesetzt wird, müssen Oxidationsmittel und Brennstoff koaxial oder koannular zugeführt werden.

Auch die US 5,549,877 A1 beschreibt ein Verfahren und eine Vorrichtung zur Herstellung von Synthesegas, wobei ein sauerstoffhaltiges Oxidationsmittel zentral am Reaktorkopf zugeführt und gemeinsam mit ringförmig um die Oxidationsmittelzufuhr zugeführtem Brennstoff in den Reaktionsraum eingeführt wird, in dem der Brennstoff zunächst unterstöchiometrisch umgesetzt wird. Es bildet sich eine Flamme aus, die nach unten in den Reaktionsraum fortschreitet. In einer Rezirkulationszone strömen die in der Flamme vorhandenen Materialien nach oben zurück. In die Reaktionszone wird stromabwärts über eine ringförmige Leitung ein zusätzlicher Strom an Oxidationsmittel zugeführt, so dass sich eine weiter ausgedehnte Flammenzone bildet.

Typischerweise wird die partielle Oxidation (POX) von kohlenwasserstoffhaltigem Einsatzmaterial zur Erzeugung von Synthesegas bei hohen Reaktortemperaturen im Bereich von 1000 °C bis 1500 °C und Drücken von bis zu 100 bara durchgeführt. Als Reaktoren für die nichtkatalytische partielle Oxidation (POX-Reaktoren) werden häufig feuerfest ausgekleidete Reaktoren mit halbkugelförmigen oder annähernd halbkugelförmigen Kuppeln verwendet. Der Partialoxidationsbrenner (POX-Brenner) ist dabei in der Regel oben an der Kuppel angebracht.

Bei den aus dem Stand der Technik bekannten technischen Verfahren und Vorrichtungen zur Partialoxidation werden verschiedene Vorrichtungen zum Einleiten und Mischen der verschiedenen Ströme, also das kohlenwasserstoffhaltige Einsatzmaterial, ein in der Regel Sauerstoff enthaltendes Oxidationsmittel und manchmal ein Moderator vorgeschlagen. Als Moderator wird häufig Kohlendioxid (CO₂) oder Wasserdampf verwendet, wobei der Moderator über einen separaten Kanal innerhalb des Brenners separat in den Reaktor eingespeist oder stromaufwärts des Brenners einem oder mehreren der anderen Einsatzströme zugemischt wird. Als Oxidationsmittel wird typischerweise Luft, angereicherte Luft oder reiner Sauerstoff (mit mindestens 95 mol% Sauerstoff) eingesetzt. Ein kohlenwasserstoffhaltiger Beschickungsstrom oder Einsatzstrom ist ein Strom, der Kohlenwasserstoffe wie Methan, höhere Kohlenwasserstoffe oder andere wasserstoff- und kohlenstoffhaltige Moleküle (z. B. Alkohole wie Methanol, Ethanol) enthält. Dies kann auch ein Strom sein, der von einem vorgeschalteten Primärreformer kommt und neben Kohlenmonoxid (CO), Wasserstoff (H₂), CO₂ und Wasser (H₂O) auch Kohlenwasserstoffe wie Methan, Ethan, Ethylen oder höhere Kohlenwasserstoffe wie Benzol, Toluol oder Xylole enthält. Die Vermischung des kohlenwasserstoffhaltigen Einsatzmaterials und des Oxidationsmittels erfolgt in der Regel in einem Reaktor in unmittelbarer Nähe der Einspritzdüsen.

Im Falle eines gasförmigen kohlenwasserstoffhaltigen Einsatzmaterials (z. B. Erdgas, Steamcracker-Abgas, Koksofengas) wird das Einsatzmaterial mit einem wasserstoffreichen Strom vermischt, in einem oder mehreren Schritten auf beispielsweise 250 bis 350 °C vorgewärmt und zur Entfernung der Schwefelkomponenten in eine Hydroentschwefelungsanlage geleitet. Vor einem optionalen Erhitzungsschritt zur weiteren Temperaturerhöhung auf beispielsweise 350 bis 550 °C kann dem entschwefelten Einsatzstoff ein Moderator, beispielsweise Dampf oder Kohlendioxid, zugeführt werden. Das kohlenwasserstoffhaltige Gemisch wird anschließend in einen Brenner eingeleitet, der am oberen Ende des Partialoxidationsreaktors angeordnet ist. Zusätzlich werden dem Brenner Sauerstoff und in einigen Fällen auch ein Moderator zugeführt. Die verschiedenen Ströme reagieren innerhalb des feuerfest ausgekleideten Reaktors bei Temperaturen von beispielsweise 1000 bis 1500 °C und typischen Drücken von beispielsweise 30 bis 100 bar zu einem Rohsynthesegas, das Wasserstoff (H₂) und Kohlenmonoxid (CO) umfasst. Der Reaktor kann am Boden mit einer zusätzlichen Katalysatorschicht versehen sein, um die Reaktionen zu erleichtern. Das Gas verlässt den Reaktor und wird in einer Gaskühleinheit, die Hochdruckdampf erzeugen kann, abgekühlt. Anschließend wird das gekühlte Synthesegas in der Sauergasentfernungsanlage von sauren Gasbestandteilen befreit. In einigen Anwendungen kann auch eine CO-Shift-Stufe vorgeschaltet sein, um den Wasserstoffgehalt zu erhöhen. Übliche Verfahren zur Entfernung von sauren Gasen sind beispielsweise physisorptive oder chemisorptive Absorptionsverfahren bzw. Gaswaschverfahren, beispielsweise Aminwaschverfahren oder die Wäsche mit tiefkaltem Methanol (Rectisol-Verfahren). In einigen Fällen, in denen keine Entschwefelung vor dem Partialoxidationsreaktor durchgeführt wird, können Schwefelkomponenten wie beispielsweise H₂S auch in dieser Stufe entfernt werden. Das gereinigte Synthesegas wird dann in einer Synthesegas-Konditionierungsanlage auf das gewünschte H2/CO-Verhältnis konditioniert. Typische Beispiele für Synthesegas-Konditionierungsschritte sind aus dem Schrifttum an sich bekannte PSA-, TSA-, Coldbox- oder Membrananlagen. Andere Möglichkeiten zur Veränderung der Synthesegaszusammensetzung sind weniger komplexe Methoden wie die Beimischung von reinen H₂- oder CO-Strömen, die in unmittelbarer Nähe vorhanden sind. Je nach Konditionierungsverfahren können unterschiedliche Produktströme erzeugt werden, z. B. ein CO-reicher Strom und ein H₂-reicher Strom.

Bei vielen chemischen Synthesen fallen Nebenprodukte oder verunreinigte Lösungsmittel an, die derzeit oft nur unzureichend verwertet werden, z. B. bei der Wärmeerzeugung, wobei CO₂ freigesetzt wird. Die partielle Oxidation ist eine Möglichkeit, diese Abfallströme in wertvolle Produkte umzuwandeln, beispielsweise in H₂ , CO oder Mischungen davon, so dass der enthaltene Kohlenstoff recycelt und in neue Produkte überführt werden kann. In der Regel ist jedoch die Menge der in unmittelbarer Nähe verfügbaren Nebenprodukte zu gering für den wirtschaftlichen Betrieb einer speziellen Vergasungsanlage. Daher ist es wünschenswert, verschiedene Ausgangsmaterialien dem Einsatzstrom einer POX-Anlage beizumischen. In vielen Fällen ist dies jedoch aufgrund der Art, der Zusammensetzung oder des Aggregatzustands der Abfallströme nicht oder nur schwierig möglich. So kann beispielsweise ein flüssiger Abfallstrom, der anorganische Elemente enthält, nicht in einen heißen gasförmigen Zufuhrstrom einer POX-Anlage eingespritzt werden, da sich durch die Verdampfungsrückstände Verstopfungen bilden oder Korrosionsprobleme an den freiliegenden Materialien auftreten können. Ein weiteres Problem kann darin bestehen, dass das Produkt ein komplexes Gemisch aus verschiedenen organischen Bestandteilen ist, die nicht vollständig verdampft werden können, da sie entweder unter den gegebenen Bedingungen einen zu niedrigen Dampfdruck haben oder thermisch instabil sind und an der Injektionsstelle Kohlenstoffablagerungen bilden.

### Beschreibung der Erfindung

Die Aufgabe der vorliegenden Erfindung besteht daher darin, ein Verfahren und eine Anlage zum Herstellen eines Rohsynthesegasstroms anzugeben, die gleichzeitig flüssige und gasförmige, kohlenwasserstoffhaltige Einsatzströme verarbeiten können, aber die erwähnten Nachteile der aus dem Stand der Technik Verfahren und Anlagen nicht aufweisen.

Diese Aufgabe wird in einem ersten Aspekt der Erfindung durch ein Verfahren mit den Merkmalen des Anspruchs 1 und in einem weiteren Aspekt der Erfindung durch ein Verfahren zum Herstellen eines Rohsynthesegasstroms mit den Merkmalen des Anspruchs 15 gelöst. Weitere Ausgestaltungen der Erfindung ergeben sich aus den Unteransprüchen der jeweiligen Kategorie.

Unter einem sauerstoffhaltigen Oxidationsmittel ist jedes sauerstoffhaltige Fluid zu verstehen, wie z. B. reiner Sauerstoff mit beliebigem Reinheitsgrad, Luft oder jedes andere Fluid, das in der Lage ist, einem kohlenstoffhaltigen Reaktanten Sauerstoff zuzuführen.

Unter Teilverdampfungsbedingungen werden diejenigen physikalisch-chemischen bzw. verfahrenstechnischen Bedingungen verstanden, die es ermöglichen, dass eine Flüssigphase und die darin enthaltenen Komponenten nicht vollständig, also zu 100 % verdampft, sondern dass nur ein erster Anteil der Flüssigphase verdampft und ein zweiter Anteil der Flüssigphase als Flüssigkeit verbleibt und aus dem Verfahren ausgeleitet wird, in einem Beispiel als Reststrom aus dem Verfahren ausgeleitet wird. Der Fachmann ist in der Lage, diese physikalisch-chemischen bzw. verfahrenstechnischen Bedingungen durch sein Fachwissen festzulegen und/oder durch Routineversuche zu ermitteln.

Unter einem Mittel ist eine Sache zu verstehen, die die Erreichung eines Ziels ermöglicht oder dabei hilfreich ist. Insbesondere sind unter Mitteln zur Durchführung eines bestimmten Verfahrensschritts alle physischen Gegenstände zu verstehen, die ein Fachmann zur Durchführung dieses Verfahrensschritts in Betracht ziehen würde. Beispielsweise wird der Fachmann unter Mitteln zum Einleiten oder Ableiten eines Stoffstroms alle Transport- und Fördereinrichtungen, also z.B. Rohrleitungen, Pumpen, Kompressoren, Ventile, verstehen, die ihm zur Durchführung dieses Verfahrensschrittes auf Grund seiner Fachkenntnisse notwendig oder sinnvoll erscheinen.

Im Sinne dieser Beschreibung ist Dampf als Synonym für Wasserdampf zu verstehen, sofern nicht im Einzelfall das Gegenteil angegeben ist. Im Gegensatz dazu bezieht sich der Begriff "Wasser" auf Wasser im flüssigen Zustand, sofern im Einzelfall nichts anderes angegeben ist.

Drücke werden, falls benötigt, in absoluten Druckeinheiten, kurz bara oder bar(a), oder in Überdruckeinheiten, kurz barg oder bar(g), angegeben, sofern im Einzelfall nichts anderes angegeben ist.

Unter einer Fluidverbindung zwischen zwei Bereichen der erfindungsgemäßen Vorrichtung oder Anlage ist jede Art von Verbindung zu verstehen, die es ermöglicht, dass ein Fluid, z. B. ein Gasstrom, von dem einen in den anderen der beiden Bereiche strömen kann, wobei zwischengeschaltete Bereiche oder Bauteile vernachlässigt werden. Unter einer direkten Fluidverbindung ist insbesondere jede Art von Verbindung zu verstehen, die es ermöglicht, dass ein Fluid, z. B. ein Gasstrom, direkt von dem einen in den anderen der beiden Bereiche strömt, wobei keine weiteren Bereiche oder Komponenten zwischengeschaltet sind, mit Ausnahme von reinen Transportvorgängen und den dafür erforderlichen Mitteln, z. B. Rohrleitungen, Ventile, Pumpen, Kompressoren, Speicher. Ein Beispiel wäre eine Rohrleitung, die direkt von dem einen in den anderen der beiden Bereiche führt.

Optional oder wahlweise bedeutet, dass das nachfolgend beschriebene Ereignis oder die Umstände eintreten oder nicht eintreten können oder bei denen ein Merkmal vorhanden sein kann oder nicht vorhanden sein kann. Die Beschreibung umfasst Fälle, in denen das Ereignis oder der Umstand eintritt, und Fälle, in denen es/er nicht eintritt. Ebenso umfasst die Beschreibung Fälle, in denen ein Merkmal vorhanden ist oder nicht vorhanden ist.

Die Bedingungen der nichtkatalytischen Partialoxidation (POX) oder der autothermen, katalytischen Partialoxidation (autothermes Reformieren, ATR) sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von fluiden oder fluidisierten kohlenstoffhaltigen Einsatzstoffströmen zu Synthesegasprodukten erzielt wird. Hierzu zählen als wichtige Parameter das Einstellen einer geeigneten Partialoxidationstemperatur von typischerweise rund 1000 °C oder darüber. Insbesondre ist es kennzeichnend für die nichtkatalytische Partialoxidation, dass kein Katalysator indem Partialoxidationsreaktor vorhanden ist.

Notwendige Anpassungen der Bedingungen der nichtkatalytischen Partialoxidation oder des autothermes Reformierens an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Ziel der vorliegenden Erfindung ist es, flüssige Kohlenwasserstoffströme, beispielsweise flüssige, kohlenwasserstoffhaltige Abfallströme in einem POX-Verfahren bzw. in einer POX-Anlage zu verwerten, die mit einem gasförmigen Einsatzstoff, beispielsweise Erdgas, Steamcracker-Abgas, Kokereigas, als Haupteinsatzstoff betrieben wird. Das POX-Verfahren bzw. die POX-Anlage können entweder mit einer zusätzlichen Katalysatorschicht im POX-Reaktor (Autotherm-Reformer, ATR) oder nicht-katalytisch (nichtkatalytische POX bzw. Gas-POX) betrieben werden. Die Erfindung beschreibt ein Verfahren und eine Anlage zur teilweisen Verdampfung eines eintretenden Flüssigeinsatzstromes und zur Verhinderung von Ablagerungen durch Kristallisation gelöster anorganischer Bestandteile oder Bildung von Kohlenstoffablagerungen, insbesondere im und/oder stromaufwärts vom POX-Brenner. Gelöste anorganische Bestandteile können beispielsweise anorganische Metallionen von Na, K, Mg, Ca, Al, Si, Fe, Co, Cr, Mn, Zn etc. oder Anionen, beispielsweise Phosphate, Halogenide und andere sein. Organische oder anorganische Schwefelverbindungen können ebenfalls vorhanden sein. In einem Beispiel sind Hauptbestandteile des Flüssigeinsatzstromes, beispielsweise eines flüssigen Abfallstromes, flüssige Kohlenwasserstoffe, die in einem Beispiel auch funktionelle Gruppen enthalten können, z. B. Alkohole, Aldehyde, Ketone, Säuren oder Ether mit Heteroatomen wie Sauerstoff, Stickstoff und Schwefel.

In einem Ausführungsbeispiel der Erfindung wird ein gasförmiger Kohlenwasserstoffeinsatzstrom auf eine Temperatur von ca. 200 bis 350 °C vorgewärmt. Dies geschieht entweder durch einen oder mehrere Wärmetauscher, beispielsweise durch Wärmetausch mit Dampf und/oder Rauchgas Wärmeträgern. In einem Beispiel wird dem Kohlenwasserstoffstrom vor, zwischen oder nach dem/den Wärmetauscher(n) ein wasserstoffreicher Strom zugeführt, der aus dem erzeugten Rohsynthesegas gewonnen und/oder aus einer externen Quelle entnommen wird. Der vorgewärmte, gasförmige Kohlenwasserstoffstrom wird sodann in zwei Teilströme aufgeteilt: Der eine Teilstrom wird in einem Beispiel direkt zu einer Hydrodesulfurierungseinheit (HDS) geleitet, während der andere Teilstrom zu einer Verdampfereinheit geleitet wird. In der Verdampfereinheit wird der vorgewärmte, gasförmige Kohlenwasserstoffstrom mit dem flüssigen Kohlenwasserstoffeinsatzstrom in Kontakt gebracht und liefert die Verdampfungswärme. Außerdem verringern die Kohlenwasserstoffe im gasförmigen Kohlenwasserstoffstrom den Partialdruck der verdampften Komponenten des flüssigen Abfallstroms, wodurch die Tendenz zu Wechselwirkungen und unerwünschten Folgereaktionen von Komponenten, beispielsweise Polymerisations- oder Crackreaktionen, im teilweise verdampften flüssigen Einsatzstrom verringert wird. In einem alternativen Beispiel wird der gesamte gasförmige Kohlenwasserstoffstrom in die Hydrodesulfurierungseinheit eingeleitet und erst stromabwärts dieser in zwei Teilströme aufgeteilt, von denen einer als Wärmeträger zu einer Verdampfereinheit geleitet wird und der andere direkt dem Partialoxidationsreaktor zugeführt wird.

Wesentlich für die Erfindung ist es, dass die Verdampfung des flüssigen Einsatzstroms in der Verdampfungsvorrichtung unter Teilverdampfungsbedingungen erfolgt, wobei die Teilverdampfungsbedingungen so gewählt werden, dass ein gasförmiger Mischeinsatzstrom und ein flüssiger Reststrom aus der Verdampfungsvorrichtung ausgeleitet werden, wobei der gasförmige Mischeinsatzstrom gegenüber dem kohlenwasserstoffhaltigen Flüssigeinsatzstrom an den Verunreinigungen abgereichert ist und wobei der flüssige Reststrom gegenüber dem kohlenwasserstoffhaltigen Flüssigeinsatzstrom an den Verunreinigungen angereichert ist. Hierdurch wird ein gasförmiger Mischeinsatzstrom erhalten, der gegenüber dem kohlenwasserstoffhaltigen Flüssigeinsatzstrom an den Verunreinigungen abgereichert ist, so dass die Bildung von Ablagerungen durch Kristallisation gelöster anorganischer Bestandteile oder von Kohlenstoffablagerungen, insbesondere im und/oder stromaufwärts vom POX-Brenner, wirkungsvoll verhindert wird.

### Bevorzugte Ausgestaltungen der Erfindung

In einem zweiten Aspekt der Erfindung ist das Verfahren dadurch gekennzeichnet, dass der zweite Gaseinsatzteilstromstrom über den mindestens einen Partialoxidationsbrenner in den Partialoxidationsreaktor eingeleitet wird und dass der gasförmige Mischeinsatzstrom über den mindestens einen Partialoxidationsbrenner und/oder über eine separate Leitung in den Partialoxidationsreaktor eingeleitet wird. Hierdurch wird eine erhöhte Flexibilität bei der Einsatzstoffzufuhr zum POX-Verfahren erhalten. Bei Einleiten des gasförmigen Mischeinsatzstroms über eine separate Leitung kann diese im Bedarfsfall leicht ausgetauscht und/oder gereinigt werden, so dass der POX-Brenner nicht beeinträchtigt wird.

In einem dritten Aspekt der Erfindung ist das Verfahren dadurch gekennzeichnet, dass der erste mittlere Siedepunkt und der zweite mittlere Siedepunkt sich um mindestens 20 °C, bevorzugt um mindestens 50 °C unterscheiden. Untersuchungen zeigen, dass auf diese Weise für die meisten Verunreinigungen gewährleistet wird, dass diese in der flüssigen Phase verbleiben und nicht oder nur in geringem Ausmaß verdampft werden. Hierdurch kann der störungsfreie Betrieb des POX-Verfahrens über einen längeren Zeitraum gewährleistet werden.

In einem vierten Aspekt der Erfindung ist das Verfahren dadurch gekennzeichnet, dass die mindestens eine Verunreinigungsfraktion anorganische oder metallorganische Bestandteile umfasst. Solche Bestandteile finden sich beispielweise in Crackerrückstandsfraktionen und anderen kohlenwasserstoffhaltigen, insbesondere erdölstämmigen flüssigen Abfallfraktionen, so dass deren stoffliche Verwertung ermöglicht wird. Vorteilhaft ist es dabei, dass die anorganischen oder metallorganischen Bestandteile einen deutlichen Siedepunktsunterschied zu den Kohlenwasserstoffen aufweisen, die die Hauptbestandteilen der mindestens einen Verunreinigungsfraktion bilden, so dass ihre Abreicherung der anorganischen oder metallorganischen Bestandteile durch Teilverdampfung leicht möglich ist.

In einem fünften Aspekt der Erfindung ist das Verfahren dadurch gekennzeichnet, dass die mindestens eine Verunreinigungsfraktion anorganische Bestandteile umfasst, die in der Hauptbestandteilsfraktion gelöst und/oder suspendiert sind. Mit anderen Worten ist es günstig, wenn die mindestens eine Verunreinigungsfraktion keine separate Phase ausbildet, da hierdurch die Verdampfung und Vermischung mit dem gasförmigen Kohlenwasserstoffstrom erleichtert wird.

In einem sechsten Aspekt der Erfindung ist das Verfahren dadurch gekennzeichnet, dass die anorganischen Bestandteile in ionischer Form vorliegen, wobei bevorzugt mindestens ein Kation vorhanden ist, das ausgewählt wird aus der Gruppe: Na, K, Mg, Ca, Al, Si, Fe, Co, Cr, Mn, Zn, und/oder wobei bevorzugt mindestens ein Anion vorhanden ist, das ausgewählt wird aus der Gruppe: Phosphate, Sulfate, Chloride, Nitrate. Diese in in ionischer Form vorliegenden anorganischen Bestandteile weisen einen deutlichen Siedepunktsunterschied zu den Kohlenwasserstoffen auf, die die Hauptbestandteilen der mindestens einen Verunreinigungsfraktion bilden, so dass ihre Abreicherung der anorganischen oder metallorganischen Bestandteile durch Teilverdampfung leicht möglich ist.

In einem siebten Aspekt der Erfindung ist das Verfahren dadurch gekennzeichnet, dass dem kohlenwasserstoffhaltigen Flüssigeinsatzstrom ein Komplexbildner zugegeben wird, der das Auskristallisieren eines oder mehrerer der ionischen Bestandteile verhindert oder vermindert. Auf diese Weise können die ionischen Bestandteile sicher in der flüssigen Phase gehalten werden, so dass ihre Zufuhr zu der Verdampfungsvorrichtung erleichtert wird, da hierbei keine Feststoffe ausfallen.

In einem achten Aspekt der Erfindung ist das Verfahren dadurch gekennzeichnet, dass der flüssige Restabfallstrom einem Verfahren zur Rückgewinnung von Metallen zugeführt wird. Auf diese Weise können die enthaltenen Metalle stofflich verwertet werden und der Anfall problematischer, teilweise toxischer Abfälle verhindert oder zumindest verringert werden.

In einem neunten Aspekt der Erfindung ist das Verfahren dadurch gekennzeichnet, dass die mindestens eine Verunreinigungsfraktion flüssige Kohlenwasserstoffe umfasst, die funktionelle Gruppen mit Heteroatomen wie Sauerstoff, Stickstoff und Schwefel enthalten, bevorzugt Alkohole, Aldehyde, Ketone, Säuren oder Ether. Solche Stofffraktionen sind problematisch, da ihre Kondensations- bzw. Polymerisationsneigung bedingt durch das Vorliegen der genannten funktionelle Gruppen besonders ausgeprägt ist, aber durch die erfindungsgemäße Partialdruckerniedrigung wirkungsvoll verringert wird.

In einem zehnten Aspekt der Erfindung ist das Verfahren dadurch gekennzeichnet, dass die mindestens eine Verunreinigungsfraktion polymerisierbare flüssige Kohlenwasserstoffe umfasst. Solche Stofffraktionen sind problematisch, da ihre Polymerisationsneigung naturgemäß besonders ausgeprägt ist, aber durch die erfindungsgemäße Partialdruckerniedrigung wirkungsvoll verringert wird.

In einem elften Aspekt der Erfindung ist das Verfahren dadurch gekennzeichnet, dass dem kohlenwasserstoffhaltigen Flüssigeinsatzstrom ein Polymerisationsinhibitor zugegeben wird. Hierdurch kann die Polymerisationsneigung noch weiter verringert werden, so dass die Zufuhr zu der Verdampfungsvorrichtung erleichtert wird, da hierbei keine Feststoffe ausfallen.

In einem zwölften Aspekt der Erfindung ist das Verfahren dadurch gekennzeichnet, dass die erste Temperatur und die Teilverdampfungsbedingungen so gewählt werden, dass der flüssige Reststrom zwischen 1 und 20 Gew.-%, bevorzugt zwischen 1 und 10 Gew.-%, meist bevorzugt zwischen 1 und 5 Gew.-% des kohlenwasserstoffhaltigen Flüssigeinsatzstroms beträgt. Untersuchungen zeigen, dass auf diese Weise für die meisten Verunreinigungen gewährleistet wird, dass diese in der flüssigen Phase verbleiben und nicht oder nur in geringem Ausmaß verdampft werden. Hierdurch kann der störungsfreie Betrieb des POX-Verfahrens über einen längeren Zeitraum gewährleistet werden.

In einem dreizehnten Aspekt der Erfindung ist das Verfahren dadurch gekennzeichnet, dass der Massenstrom des in die Verdampfungsvorrichtung eingeleiteten, aufgeheizten ersten Gaseinsatzteilstromstroms so gewählt wird, dass eine Temperatur des aus der Verdampfungsvorrichtung ausgeleiteten, gasförmiger Mischeinsatzstroms von höchstens 470 °C nicht überschritten wird. Untersuchungen zeigen, dass auf diese Weise unerwünschte Crack- oder Polymerisationsreaktionen der aus dem Flüssigeinsatzstrom stammenden Verbindungen wirkungsvoll verhindert werden können. Hierdurch kann der störungsfreie Betrieb des POX-Verfahrens über einen längeren Zeitraum gewährleistet werden.

In einem vierzehnten Aspekt der Erfindung ist das Verfahren dadurch gekennzeichnet, dass die Verdampfungsvorrichtung als Verdampfungskolonne ausgestaltet ist, die folgende Bestandteile umfasst:
- ein gegenüber der Senkrechten aufrecht angeordnetes Mantelrohr,
- mindestens eine innerhalb des Mantelrohrs angeordnete Stoffaustauschzone, enthaltend mindestens ein Stoffaustauschelement, ausgewählt aus der Gruppe: Trennböden, Füllkörperschüttung, strukturierte Packung,
- einen Einlass für den aufgeheizten ersten Gaseinsatzteilstromstrom, der unterhalb der mindestens einen Stoffaustauschzone angeordnet ist,
- einen Einlass für den Flüssigeinsatzstrom, der oberhalb der mindestens einen Stoffaustauschzone angeordnet ist,
- einen Auslass für den gasförmigen Mischeinsatzstrom, der oberhalb der mindestens einen Stoffaustauschzone angeordnet ist,
- einen Auslass für den flüssigen Reststrom, der unterhalb der mindestens einen Stoffaustauschzone angeordnet ist,
wobei die Verdampfungsvorrichtung ferner so ausgestaltet ist, dass ein Stoffaustausch und direkter Wärmeaustausch zwischen dem aufgeheizten ersten Gaseinsatzteilstromstrom und dem Flüssigeinsatzstrom ermöglicht wird.

Durch diese Ausgestaltung der Verdampfungsvorrichtung ist eine besonders effektive und platzsparende Verdampfung der Verunreinigungen enthaltenden Flüssigphase möglich.

In einem sechzehnten Aspekt der Erfindung ist die Anlage dadurch gekennzeichnet, dass der zweite Gaseinsatzteilstromstrom über den mindestens einen Partialoxidationsbrenner in den Partialoxidationsreaktor eingeleitet wird und dass der gasförmige Mischeinsatzstrom über den mindestens einen Partialoxidationsbrenner und/oder über eine separate Leitung in den Partialoxidationsreaktor eingeleitet wird. Die Vorteile dieses Aspekts der Erfindung entsprechen denen, die im Zusammenhang mit dem zweiten Aspekt der Erfindung erörtert wurden.

In einem siebzehnten Aspekt der Erfindung ist die Anlage dadurch gekennzeichnet, dass die Verdampfungsvorrichtung als Verdampfungskolonne ausgestaltet ist, die folgende Bestandteile umfasst:
- ein gegenüber der Senkrechten aufrecht angeordnetes Mantelrohr,
- mindestens eine innerhalb des Mantelrohrs angeordnete Stoffaustauschzone, enthaltend mindestens ein Stoffaustauschelement, ausgewählt aus der Gruppe: Trennböden, Füllkörperschüttung, strukturierte Packung,
- einen Einlass für den aufgeheizten ersten Gaseinsatzteilstromstrom, der unterhalb der mindestens einen Stoffaustauschzone angeordnet ist,
- einen Einlass für den Flüssigeinsatzstrom, der oberhalb der mindestens einen Stoffaustauschzone angeordnet ist,
- einen Auslass für den gasförmigen Mischeinsatzstrom, der oberhalb der mindestens einen Stoffaustauschzone angeordnet ist,
- einen Auslass für den flüssigen Reststrom, der unterhalb der mindestens einen Stoffaustauschzone angeordnet ist,
wobei die Verdampfungsvorrichtung ferner so ausgestaltet ist, dass ein Stoffaustausch und direkter Wärmeaustausch zwischen dem aufgeheizten ersten Gaseinsatzteilstromstrom und dem Flüssigeinsatzstrom ermöglicht wird.

Die Vorteile dieses Aspekts der Erfindung entsprechen denen, die im Zusammenhang mit dem vierzehnten Aspekt der Erfindung erörtert wurden.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: ein Verfahrensfließbild bzw. eine Anlage gemäß Stand der Technik,
- Fig. 2: ein erstes Detail eines Verfahrensfließbilds bzw. einer Anlage gemäß einer Ausgestaltung der Erfindung,
- Fig. 3: ein zweites Detail eines Verfahrensfließbilds bzw. einer Anlage gemäß einer Ausgestaltung der Erfindung.

Im Folgenden sind die Angaben "nicht gezeigt" oder "nicht dargestellt" so zu verstehen, dass ein Element in der besprochenen Abbildung nicht grafisch dargestellt, aber gemäß der Beschreibung trotzdem vorhanden ist.

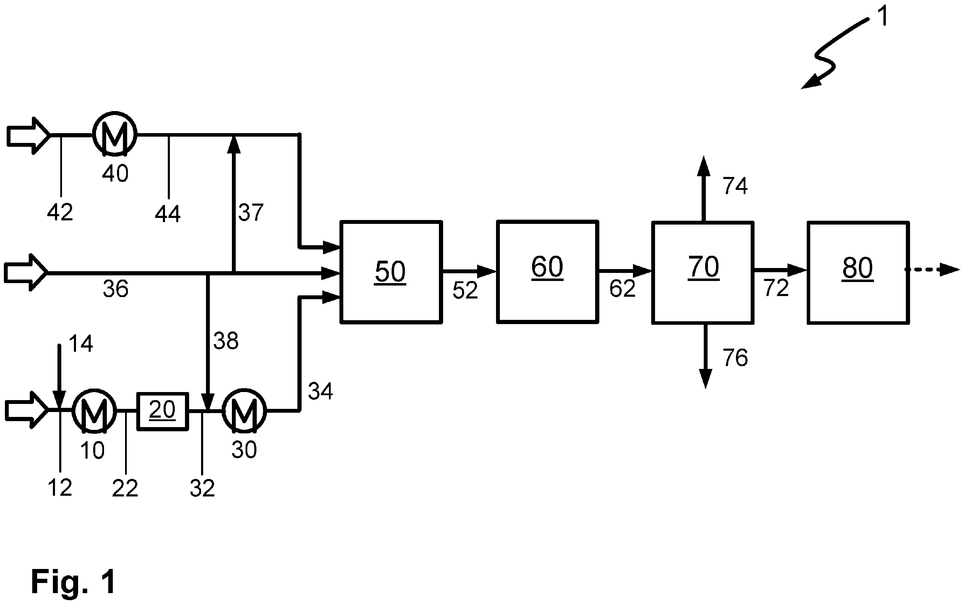

Fig. 1 zeigt ein Verfahrensfließbild bzw. eine Anlage zum Herstellen eines Rohsynthesegases durch Partialoxidation von kohlenwasserstoffhaltigen Gasen und Flüssigkeiten gemäß Stand der Technik. Über eine Leitung 12 wird ein kohlenwasserstoffhaltigen Gaseinsatzstrom, in einem Beispiel Erdgas, in das Verfahren bzw. in die Anlage eingeleitet und einer Heizstufe 10 zugeführt. Über eine Leitung 14 kann dem kohlenwasserstoffhaltigen Gaseinsatzstrom optional ein wasserstoffhaltiger Gasstrom in das Verfahren bzw. in die Anlage eingeleitet werden.

Der in einem Beispiel auf eine Temperatur von 200 bis 350 °C aufgeheizte, kohlenwasserstoffhaltigen Gaseinsatzstrom wird über eine Leitung 22 aus der Heizstufe 10 ausgeleitet und in eine optionale Entschwefelungsstufe 20 eingeleitet. In der optionalen Entschwefelungsstufe 20 erfolgt eine Abreicherung des kohlenwasserstoffhaltigen Gaseinsatzstroms an Schwefelverbindungen auf dem Fachmann an sich bekannte Weise.

Der an Schwefelverbindungen abgereicherte, kohlenwasserstoffhaltige Gaseinsatzstrom wird über eine Leitung 32 aus der Entschwefelungsstufe 20 ausgeleitet und in eine Heizstufe 30 eingeleitet. In der Heizstufe 30 wird der an Schwefelverbindungen abgereicherte, kohlenwasserstoffhaltige Gaseinsatzstrom weiter aufgeheizt und sodann über eine Leitung 34 in einen Partialoxidationsreaktor 50 eingeleitet. In einem Beispiel ist der Partialoxidationsreaktor 50 als POX-Reaktor ausgestaltet. In einem weiteren Beispiel ist der Partialoxidationsreaktor 50 als ATR ausgestaltet.

Der für die Partialoxidation im Partialoxidationsreaktor 50 benötigte, Sauerstoff enthaltende Oxidationsmittelstrom Sauerstoff wird über eine Leitung 42 in das Verfahren bzw. in die Anlage eingeleitet, mittels einer Heizstufe 40 aufgeheizt und mittels einer Leitung 44 in den Partialoxidationsreaktor 50 eingeleitet. In einem Beispiel umfasst der Oxidationsmittelstrom technisch reinen Sauerstoff. In einem Beispiel umfasst der Oxidationsmittelstrom Luft. In einem Beispiel umfasst der Oxidationsmittelstrom mit Sauerstoff angereicherte Luft.

Über eine Leitung 36 wird ein Moderatorstrom, umfassend Wasserdampf und/oder Kohlendioxid, nach optionalem Aufheizen (nicht gezeigt) in den Partialoxidationsreaktor 50 eingeleitet. In einem Beispiel wird über eine Leitung 37 ein Teil des Moderatorstroms abgezweigt und dem Sauerstoff enthaltenden Oxidationsmittelstrom zur Verdünnung, Vermischung und/oder Temperaturfeinkontrolle zugemischt. In einem weiteren Beispiel wird über eine Leitung 38 ein Teil des Moderatorstroms abgezweigt und dem kohlenwasserstoffhaltigen Gaseinsatzstrom zur Verdünnung, Vermischung und/oder Temperaturfeinkontrolle zugemischt.

Der Partialoxidationsreaktor ist als nichtkatalytischer Partialoxidationsreaktor (POX-Reaktor) oder als Autothermreformer (ATR) ausgestaltet, wobei der POX-Reaktor oder der Autothermreformer mindestens einen Partialoxidationsbrenner umfassen. Im Partialoxidationsreaktor erfolgt das Umsetzen des Gaseinsatzstroms mit dem Sauerstoff enthaltenden Oxidationsmittelstrom und dem optionalen Moderatorstrom unter Bedingungen der nichtkatalytischen Partialoxidation (POX) oder des autothermen Reformierens (ATR) zu einem heißen Rohsynthesegasstrom.

Über eine Leitung 52 wird der heiße Rohsynthesegasstrom aus dem Partialoxidationsreaktor ausgeleitet und einer Gaskühlstufe 60 zugeführt. In der Gaskühlstufe 60, die in Beispielen als Wärmetauscher oder Abhitzekessel ausgestaltet sein kann, wird das heiße Rohsynthesegas auf eine Temperatur abgekühlt, die die nachfolgende Entfernung acider, unerwünschter Gasbestandteile gestattet.

Über eine Leitung 62 wird der abgekühlte Rohsynthesegasstrom aus der Gaskühlstufe 60 ausgeleitet und einer Synthesegas-Entsäuerungsstufe 70 zugeführt, in der insbesondere acide Gasbestanteile wie Kohlendioxid CO₂ und/oder gasförmige Schwefelverbindungen, insbesondere Schwefelwasserstoff H₂S, abgetrennt werden. In einem Beispiel arbeitet die Synthesegas-Entsäuerungsstufe 70 nach einem physisorptiven Gaswaschverfahren mit tiefkaltem Methanol als Absorbens bzw. Waschmittel (Rectisol-Verfahren). In einem weiteren Beispiel arbeitet die Synthesegas-Entsäuerungsstufe 70 nach einem chemisorptiven Gaswaschverfahren mit einem aminhaltigen Absorbens bzw. Waschmittel. Die Verfahrensbedingungen des physisorptiven bzw. chemisorptiven Gaswaschverfahrens sind dem Fachmann an sich bekannt. Vorteilhaft ist es, wenn acide Gasbestanteile wie Kohlendioxid und/oder gasförmige Schwefelverbindungen bei der Regenerierung des Waschmittels getrennt erhalten und über separate Leitungen aus dem Verfahren bzw. der Anlage ausgeleitet werden. In dem in Fig. 1 gezeigten Beispiel wird Kohlendioxid über eine Leitung 74 und gasförmige Schwefelverbindungen über eine Leitung 76 ausgeleitet.

Der an aciden Gasbestanteilen abgereicherte Rohsynthesegasstrom wird in dem in Fig. 1 gezeigten Beispiel über eine Leitung 72 aus der Synthesegas-Entsäuerungsstufe 70 ausgeleitet und sodann einer Synthesegas-Konditionierungsstufe 80 zugeführt. Die Synthesegas-Konditionierungsstufe steht exemplarisch für weitere physikalisch-chemische Konditionierungsschritte, die sich nach der Art der beabsichtigen Weiterverwendung des Synthesegases richten. Beispiele für weitere Konditionierungsschritte sind die Temperaturerhöhung oder -erniedrigung, Druckerhöhung oder -erniedrigung, Änderung der chemischen Zusammensetzung, beispielsweise durch Entfernung von Nebenkomponenten oder Verunreinigungen, beispielsweise durch Adsorptionsverfahren, beispielsweise durch Druckwechseladsorption (PSA). Je nach der Art der durchgeführten Konditionierungsschritte werden ein oder mehrere Synthesegasprodukte erhalten, die aus der Synthesegas-Konditionierungsstufe 80 ausgeleitet werden, was durch einen gestrichelten Pfeil angedeutet ist.

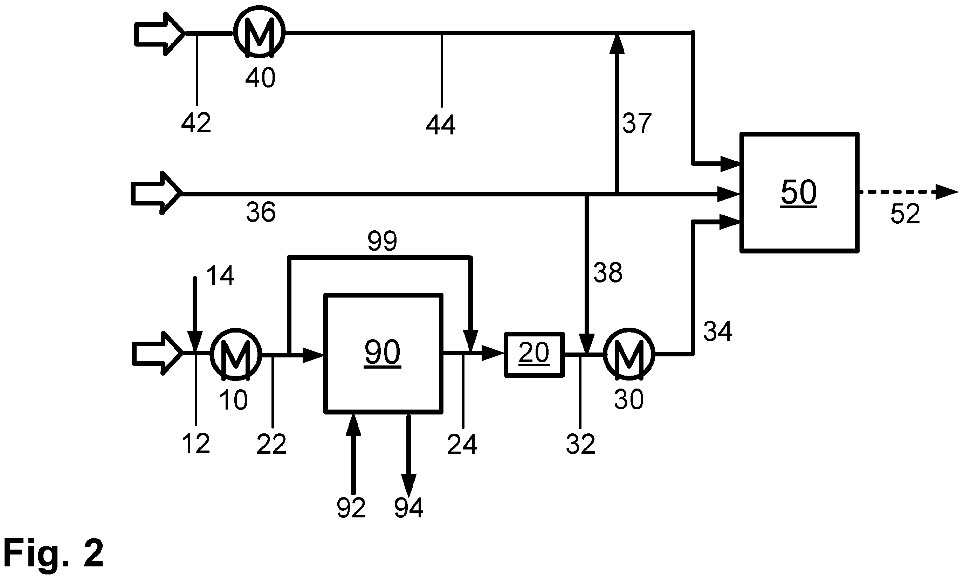

Fig. 2 zeigt ein erstes Detail eines Verfahrensfließbilds bzw. einer Anlage gemäß einer Ausgestaltung der Erfindung. Gleiche Bezugszeichen in den Figuren entsprechen gleichen Verfahrensschritten bzw. Anlagenbestandteilen und gleichen Verfahrensbedingungen, sofern dies im Einzelzusammenhang nicht anders vermerkt wird. Die übrigen, nicht in Fig. 1 gezeigten Verfahrensschritte bzw. Anlagenbestandteile entsprechen denen in Fig. 1.

Im Unterschied zu Fig. 1 wird dem in Fig. 2 gezeigten, erfindungsgemäßen Beispiel der aufgeheizte, kohlenwasserstoffhaltige Gaseinsatzstrom in Leitung 22 in einen ersten, aufgeheizten Gaseinsatzteilstromstrom und in einen zweiten, aufgeheizten Gaseinsatzteilstromstrom aufgeteilt. Der erste, aufgeheizte Gaseinsatzteilstromstrom wird über Leitung 22 in eine Verdampfungsvorrichtung 90 eingeleitet und dort mit einem Flüssigeinsatzstrom, der über eine Leitung 92 in die Verdampfungsvorrichtung 90 eingeleitet wird, in intensiven Kontakt gebracht. Dabei liefert der erste, aufgeheizte Gaseinsatzteilstrom die Verdampfungswärme. Außerdem verringern die Kohlenwasserstoffe im ersten, aufgeheizten Gaseinsatzteilstromstrom den Partialdruck der verdampften Komponenten des Flüssigeinsatzstroms, wodurch die Tendenz zu Wechselwirkungen des teilweise verdampften flüssigen Einsatzstroms verringert wird. Dabei werden die Teilverdampfungsbedingungen so gewählt, dass ein gasförmiger Mischeinsatzstrom über eine Leitung 24 und ein flüssiger Reststrom über eine Leitung 94 aus der Verdampfungsvorrichtung ausgeleitet werden, wobei der gasförmige Mischeinsatzstrom gegenüber dem kohlenwasserstoffhaltigen Flüssigeinsatzstrom an den Verunreinigungen abgereichert ist und wobei der flüssige Reststrom gegenüber dem kohlenwasserstoffhaltigen Flüssigeinsatzstrom an den Verunreinigungen angereichert ist.

Der gasförmige Mischeinsatzstrom wird über Leitung 24 aus der Verdampfungsvorrichtung 90 ausgeleitet. Der zweite, aufgeheizte Gaseinsatzteilstromstrom wird über eine Leitung 99 um die Verdampfungsvorrichtung 90 herumgeführt und dem gasförmigen Mischeinsatzstrom in Leitung 24 zugemischt. Der hierbei erhaltene, vereinigte gasförmige Mischeinsatzstrom wird über Leitung 24 der optionalen Entschwefelungsstufe 20 zugeführt. Die weiteren Verfahrensschritte bzw. Anlagenbestandteile entsprechen denen, die in Zusammenhang mit der Fig. 1 beschrieben wurden.

In einem nicht in Fig. 2 gezeigten, alternativen Beispiel wird der gesamte gasförmige Kohlenwasserstoffstrom in die Entschwefelungsstufe 20 eingeleitet und erst stromabwärts dieser in zwei Teilströme aufgeteilt, von denen ein Teilstrom als Wärmeträger zu der Verdampfungsvorrichtung 90 geleitet wird und der andere Teilstrom direkt dem Partialoxidationsreaktor 50 zugeführt wird.

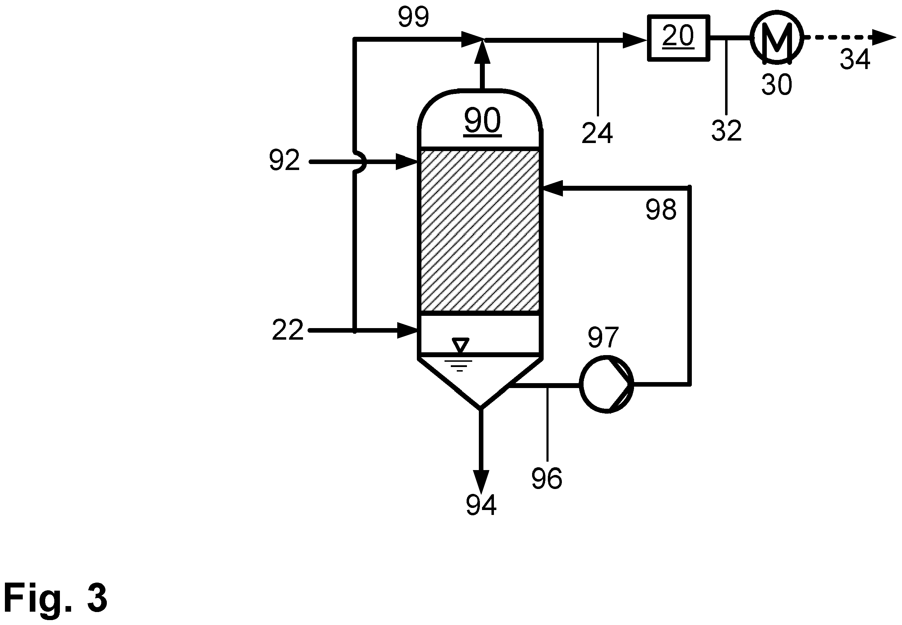

Fig. 3 zeigt ein zweites Detail eines Verfahrensfließbilds bzw. einer Anlage gemäß einer Ausgestaltung der Erfindung und darin ein Beispiel für die Ausgestaltung der Verdampfungsvorrichtung 90. Gleiche Bezugszeichen in den Figuren entsprechen gleichen Verfahrensschritten bzw. Anlagenbestandteilen und gleichen Verfahrensbedingungen, sofern dies im Einzelzusammenhang nicht anders vermerkt wird. Die übrigen, nicht in Fig. 1 gezeigten Verfahrensschritte bzw. Anlagenbestandteile entsprechen denen in Fig. 1.

Der teilweise zu verdampfende Flüssigeinsatzstrom wird über Leitung 92 im oberen Teil der Verdampfungsvorrichtung 90 in diese eingeleitet und rieselt über oberflächenvergrö-ßernde Einbauten (in Fig. 3 durch Schraffur angedeutet) wie beispielsweise wie Glockenböden, Siebböden, strukturierte Packungen, Füllkörperschüttungen oder beliebige Kombinationen von zwei oder mehr der genannten Elemente nach unten.

Der erste, aufgeheizte Gaseinsatzteilstromstrom wird am unteren Ende der Verdampfungsvorrichtung 90 in diese eingeleitet und bewegt sich im Gegenstrom zu dem Flüssigeinsatzstrom durch die Verdampfungsvorrichtung. Hierbei erfolgt ein intensiver Stoffaustausch und Wärmeaustausch zwischen den beiden Fluidströmen und ein Teil des Flüssigeinsatzstroms wird verdampft, wodurch ein gasförmiger Mischeinsatzstrom erhalten wird. Dabei werden die Teilverdampfungsbedingungen so gewählt, dass ein gasförmiger Mischeinsatzstrom über eine Leitung 24 und ein flüssiger Reststrom über eine Leitung 94 aus der Verdampfungsvorrichtung ausgeleitet werden, wobei der gasförmige Mischeinsatzstrom gegenüber dem kohlenwasserstoffhaltigen Flüssigeinsatzstrom an den Verunreinigungen abgereichert ist und wobei der flüssige Reststrom gegenüber dem kohlenwasserstoffhaltigen Flüssigeinsatzstrom an den Verunreinigungen angereichert ist.

Der gasförmige Mischeinsatzstrom wird über Leitung 24 aus der Verdampfungsvorrichtung 90 ausgeleitet. Der zweite, aufgeheizte Gaseinsatzteilstromstrom wird über eine Leitung 99 um die Verdampfungsvorrichtung 90 herumgeführt und dem gasförmigen Mischeinsatzstrom in Leitung 24 zugemischt. Der hierbei erhaltene, vereinigte gasförmige Mischeinsatzstrom wird über Leitung 24 der optionalen Entschwefelungsstufe 20 zugeführt. Die weiteren Verfahrensschritte bzw. Anlagenbestandteile entsprechen denen, die in Zusammenhang mit der Fig. 1 beschrieben wurden.

Zur Vermeidung unerwünschter Flüssigkeitsausträge können in einem Beispiel am Kopf der Verdampfungsvorrichtung 90 Entnebelungsvorrichtungen angebracht werden. In einem weiteren Beispiel kann der Gaseinlass in die Verdampfungsvorrichtung als Tauchrohr ausgestaltet werden, das in das in Fig. 3 angedeutete, im unteren Teil der Verdampfungsvorrichtung gesammelte Reservoir flüssiger Kohlenwasserstoffe eintaucht.

Zur Einstellung der Strömungsbedingungen beim Stoffaustausch und Wärmeaustausch in der Verdampfungsvorrichtung kann in einem Beispiel in der in Fig. 3 gezeigten Weise ein Teil des im unteren Teil der Verdampfungsvorrichtung gesammelten Reservoirs flüssiger Kohlenwasserstoffe über eine Leitung 96 und eine Pumpe 97 ausgeleitet und über eine Leitung 98 in den oberen Teil der Verdampfungsvorrichtung, bevorzugt oberhalb der oberflächenvergrößernden Einbauten, zurückgeführt werden. Der verbleibende Anteil des im unteren Teil der Verdampfungsvorrichtung gesammelten Reservoirs flüssiger Kohlenwasserstoffe wird über eine Leitung 94 aus der Verdampfungsvorrichtung ausgeleitet und wird in einem Beispiel einer weiteren Behandlung oder der Rückgewinnung enthaltener Bestandteile, beispielsweise von Metallbestandteilen, zugeführt.

Änderungen an den im Vorstehenden beschriebenen Ausführungsformen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

### Bezugszeichenliste

- [1]: Verfahren bzw. Anlage
- [10]: Heizstufe
- [12]: Leitung
- [14]: Leitung
- [20]: Entschwefelungsstufe
- [22]: Leitung
- [24]: Leitung
- [30]: Heizstufe
- [32]: Leitung
- [34]: Leitung
- [36]: Leitung
- [37]: Leitung
- [38]: Leitung
- [40]: Heizstufe
- [42]: Leitung
- [44]: Leitung
- [50]: Partialoxidationsreaktor ((POX, ATR)
- [52]: Leitung
- [60]: Gaskühlstufe
- [62]: Leitung
- [70]: Synthesegas-Entsäuerungsstufe
- [72]: Leitung
- [74]: Leitung
- [76]: Leitung
- [80]: Synthesegas-Konditionierungsstufe
- [90]: Verdampfungsstufe
- [92]: Leitung
- [94]: Leitung
- [96]: Leitung
- [97]: Pumpe
- [98]: Leitung
- [99]: Leitung

## Patentansprüche

1. Verfahren zum Herstellen eines Wasserstoff und Kohlenoxide enthaltenden Rohsynthesegases durch gleichzeitige Partialoxidation eines kohlenwasserstoffhaltigen Gaseinsatzstroms und eines kohlenwasserstoffhaltigen Flüssigeinsatzstroms, umfassend folgende Schritte:
(a) Bereitstellen des kohlenwasserstoffhaltigen Gaseinsatzstroms, vorzugsweise Erdgas, Aufheizen des kohlenwasserstoffhaltigen Gaseinsatzstroms;
(b) Bereitstellen des kohlenwasserstoffhaltigen Flüssigeinsatzstroms, umfassend Kohlenwasserstoffe als Hauptbestandteilsfraktion und mindestens eine Verunreinigungen enthaltende Verunreinigungsfraktion, wobei die Hauptbestandteilsfraktion einen ersten mittleren Siedepunkt aufweist und wobei die mindestens eine Verunreinigungsfraktion einen zweiten mittleren Siedepunkt aufweist, wobei der zweite mittlere Siedepunkt größer ist als der erste mittlere Siedepunkt;
(c) Aufteilen des aufgeheizten kohlenwasserstoffhaltigen Gaseinsatzstroms in einen ersten Gaseinsatzteilstromstrom und in einen zweiten Gaseinsatzteilstromstrom;
(d) Einleiten des aufgeheizten ersten Gaseinsatzteilstromstroms und des Flüssigeinsatzstroms in eine Verdampfungsvorrichtung, Inkontaktbringen des aufgeheizten ersten Gaseinsatzteilstromstroms und des Flüssigeinsatzstroms in der Verdampfungsvorrichtung unter Teilverdampfungsbedingungen, wobei die Teilverdampfungsbedingungen so gewählt werden, dass ein gasförmiger Mischeinsatzstrom und ein flüssiger Reststrom aus der Verdampfungsvorrichtung ausgeleitet werden, wobei der gasförmige Mischeinsatzstrom gegenüber dem kohlenwasserstoffhaltigen Flüssigeinsatzstrom an den Verunreinigungen abgereichert ist und wobei der flüssige Reststrom gegenüber dem kohlenwasserstoffhaltigen Flüssigeinsatzstrom an den Verunreinigungen angereichert ist;
(e) Einleiten des gasförmigen Mischeinsatzstroms und des zweiten Gaseinsatzteilstromstroms in einen Partialoxidationsreaktor, der als nichtkatalytischer Partialoxidationsreaktor (POX-Reaktor) oder als Autothermreformer (ATR) ausgestaltet ist, wobei der POX-Reaktor oder der Autothermreformer mindestens einen Partialoxidationsbrenner umfassen, Umsetzen des gasförmigen Mischeinsatzstroms und des zweiten Gaseinsatzteilstromstroms mit einem Sauerstoff enthaltenden Oxidationsmittelstrom und einem optionalen Moderatorstrom, umfassend Wasserdampf und/oder Kohlendioxid, im Partialoxidationsreaktor unter Bedingungen der nichtkatalytischen Partialoxidation (POX) oder des autothermen Reformierens (ATR) zu einem Rohsynthesegasstrom;
(f) Ausleiten des Rohsynthesegasstroms aus dem Partialoxidationsreaktor und Zuführen des Rohsynthesegasstroms zu mindestens einem weiteren Reinigungs-, Behandlungs-, Konditionierungs- und/oder Verarbeitungsschritt.

2. Verfahren nach Anspruch 1, **dadurch gekennzeichnet, dass** der zweite Gaseinsatzteilstromstrom über den mindestens einen Partialoxidationsbrenner in den Partialoxidationsreaktor eingeleitet wird und dass der gasförmige Mischeinsatzstrom über den mindestens einen Partialoxidationsbrenner und/oder über eine separate Leitung in den Partialoxidationsreaktor eingeleitet wird.

3. Verfahren nach einem der vorigen Ansprüche, **dadurch gekennzeichnet, dass** der erste mittlere Siedepunkt und der zweite mittlere Siedepunkt sich um mindestens 20 °C, bevorzugt um mindestens 50 °C unterscheiden.

4. Verfahren nach einem der vorigen Ansprüche, **dadurch gekennzeichnet, dass** die mindestens eine Verunreinigungsfraktion anorganische oder metallorganische Bestandteile umfasst.

5. Verfahren nach Anspruch 4, **dadurch gekennzeichnet, dass** die mindestens eine Verunreinigungsfraktion anorganische Bestandteile umfasst, die in der Hauptbestandteilsfraktion gelöst und/oder suspendiert sind.

6. Verfahren nach Anspruch 5, **dadurch gekennzeichnet, dass** die anorganischen Bestandteile in ionischer Form vorliegen, wobei bevorzugt mindestens ein Kation vorhanden ist, das ausgewählt wird aus der Gruppe: Na, K, Mg, Ca, Al, Si, Fe, Co, Cr, Mn, Zn, und/oder wobei bevorzugt mindestens ein Anion vorhanden ist, das ausgewählt wird aus der Gruppe: Phosphate, Sulfate, Chloride, Nitrate.

7. Verfahren nach Anspruch 6, **dadurch gekennzeichnet, dass** dem kohlenwasserstoffhaltigen Flüssigeinsatzstrom ein Komplexbildner zugegeben wird, der das Auskristallisieren eines oder mehrerer der ionischen Bestandteile verhindert oder vermindert.

8. Verfahren nach Anspruch 4 oder 6, **dadurch gekennzeichnet, dass** der flüssige Reststrom einem Verfahren zur Rückgewinnung von Metallen zugeführt wird.

9. Verfahren nach einem der vorigen Ansprüche, **dadurch gekennzeichnet, dass** die mindestens eine Verunreinigungsfraktion flüssige Kohlenwasserstoffe umfasst, die funktionelle Gruppen mit Heteroatomen wie Sauerstoff, Stickstoff und Schwefel enthalten, bevorzugt Alkohole, Aldehyde, Ketone, Säuren oder Ether.

10. Verfahren nach einem der vorigen Ansprüche, **dadurch gekennzeichnet, dass** die mindestens eine Verunreinigungsfraktion polymerisierbare flüssige Kohlenwasserstoffe umfasst.

11. Verfahren nach Anspruch 10, **dadurch gekennzeichnet, dass** dem kohlenwasserstoffhaltigen Flüssigeinsatzstrom ein Polymerisationsinhibitor zugegeben wird.

12. Verfahren nach einem der vorigen Ansprüche, **dadurch gekennzeichnet, dass** die erste Temperatur und die Teilverdampfungsbedingungen so gewählt werden, dass der flüssige Reststrom zwischen 1 und 20 Gew.-%, bevorzugt zwischen 1 und 10 Gew.-%, meist bevorzugt zwischen 1 und 5 Gew.-% des kohlenwasserstoffhaltigen Flüssigeinsatzstroms beträgt.

13. Verfahren nach einem der vorigen Ansprüche, **dadurch gekennzeichnet, dass** der Massenstrom des in die Verdampfungsvorrichtung eingeleiteten, aufgeheizten ersten Gaseinsatzteilstromstroms so gewählt wird, dass eine Temperatur des aus der Verdampfungsvorrichtung ausgeleiteten, gasförmiger Mischeinsatzstroms von höchstens 470 °C nicht überschritten wird.

14. Verfahren nach einem der vorigen Ansprüche, **dadurch gekennzeichnet, dass** die Verdampfungsvorrichtung als Verdampfungskolonne ausgestaltet ist, die folgende Bestandteile umfasst:
- ein gegenüber der Senkrechten aufrecht angeordnetes Mantelrohr,
- mindestens eine innerhalb des Mantelrohrs angeordnete Stoffaustauschzone, enthaltend mindestens ein Stoffaustauschelement, ausgewählt aus der Gruppe: Trennböden, Füllkörperschüttung, strukturierte Packung,
- einen Einlass für den aufgeheizten ersten Gaseinsatzteilstromstrom, der unterhalb der mindestens einen Stoffaustauschzone angeordnet ist,
- einen Einlass für den Flüssigeinsatzstrom, der oberhalb der mindestens einen Stoffaustauschzone angeordnet ist,
- einen Auslass für den gasförmigen Mischeinsatzstrom, der oberhalb der mindestens einen Stoffaustauschzone angeordnet ist,
- einen Auslass für den flüssigen Reststrom, der unterhalb der mindestens einen Stoffaustauschzone angeordnet ist,
wobei die Verdampfungsvorrichtung ferner so ausgestaltet ist, dass ein Stoffaustausch und direkter Wärmeaustausch zwischen dem aufgeheizten ersten Gaseinsatzteilstromstrom und dem Flüssigeinsatzstrom ermöglicht wird.

15. Anlage zum Herstellen eines Wasserstoff und Kohlenoxide enthaltenden Rohsynthesegases durch gleichzeitige Partialoxidation eines kohlenwasserstoffhaltigen Gaseinsatzstroms und eines kohlenwasserstoffhaltigen Flüssigeinsatzstroms, umfassend folgende, miteinander in Fluidverbindung stehende Bestandteile:
(a) Mittel zum Bereitstellen des kohlenwasserstoffhaltigen Gaseinsatzstroms, vorzugsweise Erdgas, und Mittel zum Aufheizen des kohlenwasserstoffhaltigen Gaseinsatzstroms;
(b) Mittel zum Bereitstellen des kohlenwasserstoffhaltigen Flüssigeinsatzstroms, umfassend Kohlenwasserstoffe als Hauptbestandteilsfraktion und mindestens eine Verunreinigungen enthaltende Verunreinigungsfraktion, wobei die Hauptbestandteilsfraktion einen ersten mittleren Siedepunkt aufweist und wobei die mindestens eine Verunreinigungsfraktion einen zweiten mittleren Siedepunkt aufweist, wobei der zweite mittlere Siedepunkt größer ist als der erste mittlere Siedepunkt;
(c) Mittel zum Aufteilen des aufgeheizten kohlenwasserstoffhaltigen Gaseinsatzstroms in einen ersten Gaseinsatzteilstromstrom und in einen zweiten Gaseinsatzteilstromstrom;
(d) eine Verdampfungsvorrichtung, geeignet zum Inkontaktbringen des aufgeheizten ersten Gaseinsatzteilstromstroms und des Flüssigeinsatzstroms in der Verdampfungsvorrichtung unter Teilverdampfungsbedingungen, wobei die Teilverdampfungsbedingungen so gewählt werden, dass ein gasförmiger Mischeinsatzstrom und ein flüssiger Reststrom aus der Verdampfungsvorrichtung ausgeleitet werden, wobei der gasförmige Mischeinsatzstrom gegenüber dem kohlenwasserstoffhaltigen Flüssigeinsatzstrom an den Verunreinigungen abgereichert ist und wobei der flüssige Reststrom gegenüber dem kohlenwasserstoffhaltigen Flüssigeinsatzstrom an den Verunreinigungen angereichert ist, Mittel zum Einleiten des aufgeheizten ersten Gaseinsatzteilstromstroms und des Flüssigeinsatzstroms in die Verdampfungsvorrichtung;
(e) einen Partialoxidationsreaktor, der als nichtkatalytischer Partialoxidationsreaktor (POX-Reaktor) oder als Autothermreformer (ATR) ausgestaltet ist, wobei der POX-Reaktor oder der Autothermreformer mindestens einen Partialoxidationsbrenner umfassen, Mittel zum Einleiten des gasförmigen Mischeinsatzstroms und des zweiten Gaseinsatzteilstromstroms in den Partialoxidationsreaktor;
(f) Mittel zum Ausleiten des Rohsynthesegasstroms aus dem Partialoxidationsreaktor und Mittel zum Zuführen des Rohsynthesegasstroms zu mindestens einem weiteren Reinigungs-, Behandlungs-, Konditionierungs- und/oder Verarbeitungsschritt.

16. Anlage nach Anspruch 15, so ausgestaltet, dass der zweite Gaseinsatzteilstromstrom über den mindestens einen Partialoxidationsbrenner in den Partialoxidationsreaktor eingeleitet wird und dass der gasförmige Mischeinsatzstrom über den mindestens einen Partialoxidationsbrenner und/oder über eine separate Leitung in den Partialoxidationsreaktor eingeleitet wird.

17. Anlage nach Anspruch 15 oder 16, wobei die Verdampfungsvorrichtung als Verdampfungskolonne ausgestaltet ist, die folgende Bestandteile umfasst:
- ein gegenüber der Senkrechten aufrecht angeordnetes Mantelrohr,
- mindestens eine innerhalb des Mantelrohrs angeordnete Stoffaustauschzone, enthaltend mindestens ein Stoffaustauschelement, ausgewählt aus der Gruppe: Trennböden, Füllkörperschüttung, strukturierte Packung,
- einen Einlass für den aufgeheizten ersten Gaseinsatzteilstromstrom, der unterhalb der mindestens einen Stoffaustauschzone angeordnet ist,
- einen Einlass für den Flüssigeinsatzstrom, der oberhalb der mindestens einen Stoffaustauschzone angeordnet ist,
- einen Auslass für den gasförmigen Mischeinsatzstrom, der oberhalb der mindestens einen Stoffaustauschzone angeordnet ist,
- einen Auslass für den flüssigen Reststrom, der unterhalb der mindestens einen Stoffaustauschzone angeordnet ist,
wobei die Verdampfungsvorrichtung ferner so ausgestaltet ist, dass ein Stoffaustausch und direkter Wärmeaustausch zwischen dem aufgeheizten ersten Gaseinsatzteilstromstrom und dem Flüssigeinsatzstrom ermöglicht wird.
